# EUROPEAN PATENT APPLICATION

(11) **EP 4 593 515 A1**
(43) Date of publication of application: **30.07.2025**
(21) Application number: 23868167.0
(22) Date of filing: 19.09.2023
(51) Int. Cl.: H04W 76/15, H04W 4/00, H04W 12/47, H04W 12/77, H04W 84/10, H04W 84/12

(54) **COMMUNICATION DEVICE, CONTROL METHOD FOR COMMUNICATION DEVICE, AND PROGRAM**

(30) Priority: 21.09.2022 JP 2022150563; 28.06.2023 JP 2023106363
(71) Applicant: CANON KABUSHIKI KAISHA, Tokyo 146-8501 (JP)
(72) Inventor: TACHIBANA Hideaki, Tokyo 146-8501 (JP)
(74) Representative: Canon Europe Limited
(86) International application number: PCT/JP2023/033879
(87) International publication number: WO 2024/063046

(57) **Abstract**

An object of the present invention is to provide a method by which an apparatus having multiple communication interfaces is able to appropriately execute setting processing of a communication parameter. A communication apparatus capable of performing communication using a plurality of communication interfaces for wireless local area network (LAN) communication, the communication apparatus includes execution means for executing setting processing of a communication parameter, and determination means for determining a communication interface to be used in the setting processing, from among the plurality of communication interfaces, wherein the execution means executes the setting processing on the communication interface determined by the determination means.

## Description

### TECHNICAL FIELD

The present invention relates to a setting of a communication parameter.

### BACKGROUND

Wireless communication apparatuses supporting an IEEE802.11 standard and a Wi-Fi^{®} standard, for example, that simultaneously operate a station (hereinafter, STA) function and an access point (hereinafter, AP) function have been conventionally proposed. Connection with an AP is established by the STA function, and connection with a STA is established by the AP function. In addition, a single wireless communication apparatus which simultaneously operates a plurality of STA functions has also been proposed. Thus, the wireless communication apparatus connects with a plurality of different APs. In this manner, a single communication apparatus physically or virtually including a plurality of communication interfaces is able to execute communication.

As a technique of sharing a communication parameter to access a wireless network, for example, a Wi-Fi Protected Setup standard (hereinafter, WPS) and a Wi-Fi Device Provisioning Protocol (DPP) standard (hereinafter, DPP) have been formulated. In the DPP, it is defined that an apparatus called a configurator sets a communication parameter using bootstrap information, to an apparatus called an enrollee. Patent Document (PTL) 1 discusses a technique in which frequency information is included in bootstrap information including a two-dimensional code in accordance with whether an apparatus is connected to an AP.

### Citation List

### Patent Literature

PTL 1: Japanese Patent Application Laid-Open No. 2018-37978

### SUMMARY

Technical Problem. For example, in a case of a wireless communication apparatus including a plurality of communication interfaces as described above, which communication interface, from among the plurality of communication interfaces, is to be used in setting processing of a communication parameter is not determined. For this reason, the setting processing of a communication parameter may fail to be appropriately performed.

In view of the foregoing, the present invention is directed to providing a method that enables an apparatus including a plurality of communication interfaces, to appropriately execute setting processing of a communication parameter.

Solution to Problem. A communication apparatus capable of performing communication using a plurality of communication interfaces, the communication apparatus including execution means for executing setting processing of a communication parameter, and determination means for determining a communication interface to be used in the setting processing, from among the plurality of communication interfaces, wherein the execution means executes the setting processing on the communication interface determined by the determination means.

### Advantageous Effects of Invention

In an apparatus including a plurality of communication interfaces, setting processing of a communication parameter is appropriately executed.

### BRIEF DESCRIPTION OF THE DRAWINGS

Fig. 1 is a diagram illustrating an overall configuration of a communication system.
Fig. 2 is a diagram illustrating a hardware configuration of a communication apparatus 101.
Fig. 3 is a flowchart illustrating processing that is executed by the communication apparatus 101.
Fig. 4 is a flowchart illustrating processing of selecting a communication interface.
Fig. 5 is a sequence illustrating processing according to an exemplary embodiment.
Fig. 6 is a diagram illustrating an example of a user interface.
Fig. 7 is a flowchart illustrating processing that is executed by a communication apparatus 101 according to a second exemplary embodiment.

### DETAILED DESCRIPTION

The following exemplary embodiments are described with reference to the drawings. The present invention is not necessarily limited to the exemplary embodiments. Not all combinations of features described in the exemplary embodiments are necessarily essential to the solving means of the present invention.

[First Exemplary Embodiment]. A first exemplary embodiment will be described with reference to the drawings. In the following description, communication between apparatuses is performed by wireless local area network (LAN) communication compliant with the Institute of Electrical and Electronics Engineers (IEEE) 802.11 standard will be described.

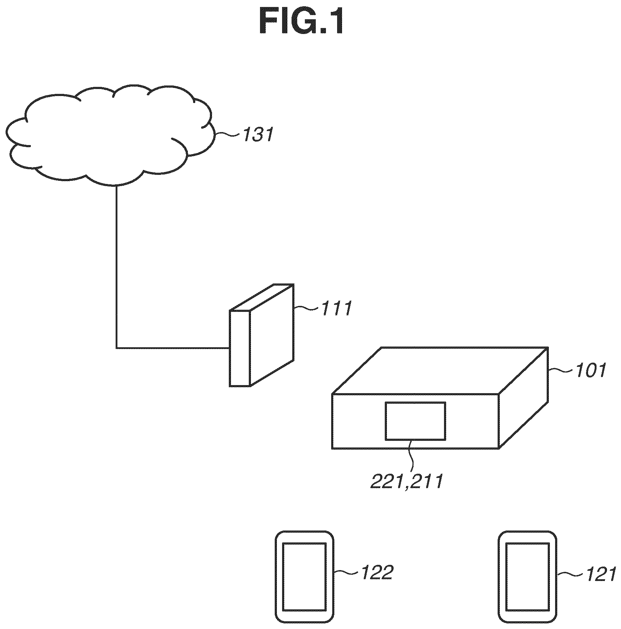

Fig. 1 illustrates an overall configuration of a communication system according to the present exemplary embodiment. The communication system according to the present exemplary embodiment is a communication system including a communication apparatus operating in compliance with a Device Provisioning Protocol (DPP) standard of the Wireless Fidelity (Wi-Fi). Here, the DPP standard refers to a Wi-Fi Easy Connect^{®} (hereinafter, described as "WEC") standard. In Fig. 1, a communication apparatus 111 operates as an access point (AP) being a wireless base station (master station), and forms a wireless network 131. A communication apparatus 101 is a printer operating as a station (STA) connecting to a network provided by the AP. Communication apparatuses 121 and 122 are smart devices. Here, the communication apparatuses 121 and 122 each have an AP function by which the apparatus operates as an AP, and a station function by which the apparatus operates as a STA. Here, as an example, a printer or a smart device will be described as an example of a communication apparatus, but the communication apparatus may be a communication apparatus, such as a personal computer (PC), a smartphone, or a digital camera.

The communication apparatus 101 and the communication apparatuses 121 and 122 execute a communication parameter setting in compliance with the DPP. In the DPP, the communication apparatuses 121 and 122 are configurators that provide a communication parameter, and the communication apparatus 101 is an enrollee that receives the communication parameter. The communication apparatus 101 may be a configurator and the communication apparatuses 121 and 122 may be enrollees. The wireless network 131 is a wide area network (hereinafter, WAN). In the network established by the communication apparatus 111, connection to the WAN 131 is performed using the communication apparatus 111 as a gateway. The communication apparatus 101 is able to selectively connect with the communication apparatus 111, and the communication apparatuses 121 and 122. In the present exemplary embodiment, a description will be given of connection of the communication apparatus 101 and the communication apparatus 121 that uses the DPP. Even in a case where the communication apparatus 101 and the communication apparatus 122 are connected using the DPP, similar processing is executed. While the description will be given of a case where the communication apparatus 101 performs the DPP using a first STA function unit 231, similar processing is executed even in a case where the communication apparatus 101 performs the DPP using a second STA function unit 232 and an external connection communication unit 233.

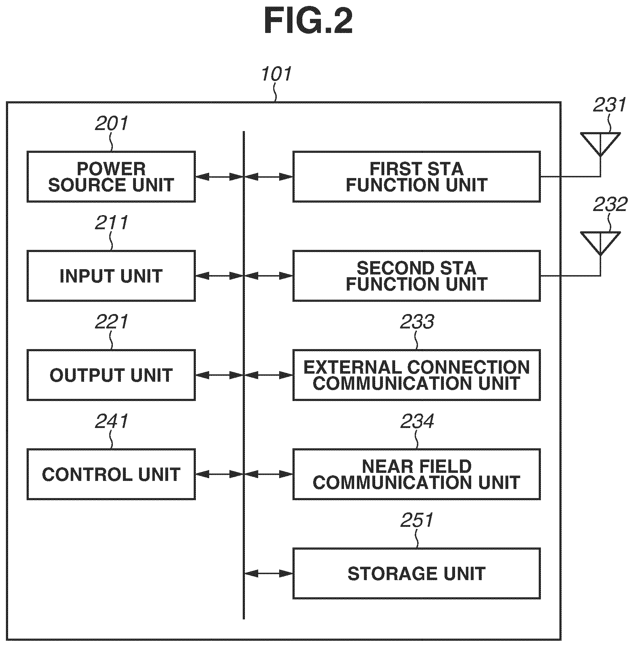

Fig. 2 illustrates a hardware configuration of the communication apparatus 101. The communication apparatus 101 includes a power source unit 201, an input unit 211, an output unit 221, the first STA function unit 231, the second STA function unit 232, the external connection communication unit 233, a near field communication unit 234, a control unit 241, and a storage unit 251. The first STA function unit 231 and the second STA function unit 232 may be exclusively controlled in chronological order in one embedded wireless integrated circuit (IC) chip, or may be individually controlled in an embedded wireless IC chip corresponding to the first STA function unit 231, and an embedded wireless IC chip corresponding to the second STA function unit 232. The external connection communication unit 233 controls an externally-connected communication adapter via an interface, such as a secure digital input/output (SDIO), a universal serial bus (USB), or a peripheral component interconnect express (PCIe). The STA function is provided also in the communication adapter. The first STA function unit 231, the second STA function unit 232, and a STA function unit of the external connection communication unit 233 may be controlled by respective applications, or may be controlled by a common application.

The near field communication unit 234 controls near field wireless communication, such as near field communication (hereinafter, NFC) and the Bluetooth^{®}. The power source unit 201 supplies power to each piece of hardware. The power source unit 201 acquires power from an alternating-current (AC) power source or a battery, for example. The input unit 211 receives various operations from a user. For example, the input unit 211 includes a button, a touch panel, or the like. The output unit 221 performs various outputs to the user. Here, the outputs performed by the output unit 221 include, for example, the display of a light-emitting diode (LED), the display on a screen, voice output by a speaker, vibration output, and the like. Both the input unit 211 and the output unit 221 may be implemented by one module like a touch panel display. In the present exemplary embodiment, a description will be given of a case in which input-output is performed via a touch panel display.

The first STA function unit 231 and the second STA function unit 232 perform wireless LAN control in compliance with an IEEE802.11 standard, perform transmission and reception of radio waves, and connect to an AP and/or a communication apparatus operating the AP function. The first STA function unit 231 and the second STA function unit 232 are communication interfaces for communication, and media access control (MAC) addresses different from each other are individually allocated. While the following description will be given of a case in which the first STA function unit 231 and the second STA function unit 232 execute communication using channels different from each other, the same channel may be used. In the communication apparatus 101, two STA functions are simultaneously operated, and the communication apparatus 101 is able to connect to up to two APs or two communication apparatuses operating the AP function. In addition, the communication apparatus 101 is also able to activate a third STA function by an external communication adapter of the external connection communication unit 233. That is, in a state in which the communication apparatus 101 performs communication connection with one AP, the communication apparatus 101 is able to establish communication connection with a different AP, or is able to perform communication connection with a differentAP. The external connection communication unit 233 also performs wireless LAN control in compliance with the IEEE802.11 standard. Furthermore, the first STA function unit 231, the second STA function unit 232, and the external connection communication unit 233 have a wireless communication setting protocol that is based on the DPP. Here, while, an example configuration including a plurality of STA function units has been described as an example, the configuration is not limited to this configuration as long as a plurality of communication interfaces is included. For example, a plurality of communication interfaces of a STA function unit and an AP function unit may be included.

The control unit 241 includes a processor, such as a central processing unit (CPU) or a micro processing unit (MPU), and controls the entire communication apparatus 101 by executing a program stored in the storage unit 251. The storage unit 251 includes a memory, such as a read-only memory (ROM) or a random access memory (RAM), and stores programs for performing each pieces of processing illustrated in a flowchart to be described below, and other various types of processing, and various types of information. Each pieces of processing illustrated in a flowchart to be described below may be executed using one CPU, or another configuration may be employed. More specifically, each pieces of processing illustrated in a flowchart to be described below may be executed in a distributed manner by making cooperation between a plurality of processors, RAMs, ROMs, and storages.

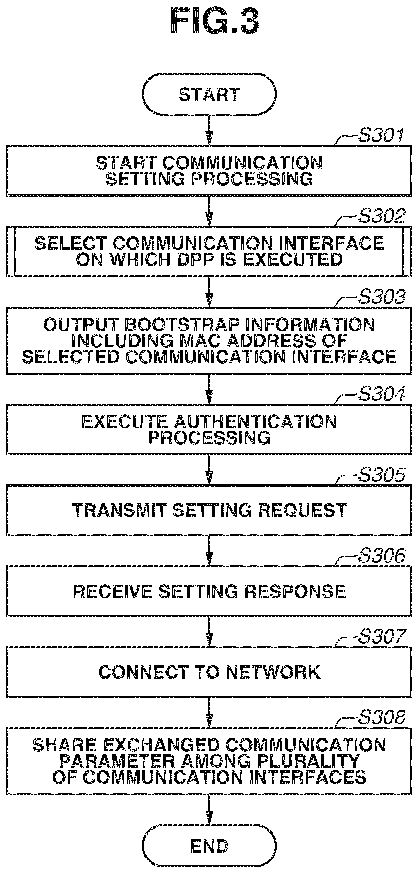

Fig. 3 illustrates a flowchart of processing to be executed by the communication apparatus 101. Hereinafter, each step (process) is assigned a reference numeral starting from "S".

In step S301, the communication apparatus 101 starts the processing illustrated in the flowchart in Fig. 3, based on an instruction obtained in a case where the user selects a setting menu by operating the input unit 211. The start timing is not limited to this, and may be a timing at which the communication apparatus 101 is activated, or a timing at which a wireless LAN function of the communication apparatus 101 is enabled.

In step S302, the communication apparatus 101 performs selection of a communication interface on which setting processing of a communication parameter that is based on the DPP is to be executed. Details of the communication interface selection processing will be described below.

In step S303, the communication apparatus 101 outputs bootstrap information including a MAC address of the communication interface selected in step S302. The bootstrap information includes public key information, a MAC address, channel information, and frequency band information. The output of the bootstrap information in the present exemplary embodiment is performed by displaying the bootstrap information on the output unit 221 as a quick response (QR) code^{®}. An output method of the bootstrap information is not limited to the display of the QR code, and other communication apparatuses (the communication apparatuses 121 and 122, etc.) may be notified of the bootstrap information via NFC by the near field communication unit 234 or near field wireless communication, such as Bluetooth^{®}. Alternatively, bootstrapping information may be preliminarily generated for each piece of MAC address information on a corresponding one of a plurality of communication interfaces and stored in the storage unit 251, and bootstrapping information corresponding to the communication interface selected in step S302 may be output. Aside from this, bootstrapping information including MAC address information on a communication interface selected at a timing at which the communication interface is selected in step S302 may be generated and output in step S303. In selecting an output method of bootstrap information, an output method may be selected in accordance with the capability of an apparatus like outputting bootstrap information as a QR code in a case where an apparatus includes a display unit. Here, bootstrap information including a MAC address of a communication interface selected in step S302 is output. Nevertheless, information included in bootstrap information is not limited to this. Bootstrap information including channel information regarding a channel to be used in the selected communication interface or bootstrap information including frequency band information regarding a frequency band to be used in the selected communication interface may be output. At least one or more pieces of information on these pieces of information may be output. In a case where bootstrap information including channel information is output, an authentication request in a channel corresponding to the channel information is awaited. The following description will be given of a case in which bootstrap information including a MAC address is output.

In the processing in step S304 and subsequent steps, the communication apparatus 101 executes a setting of a communication parameter that uses bootstrap information, in compliance with the DPP, together with the communication apparatus 121 operating as a configurator, using any of the first STA function unit 231, the second STA function unit 232, and the external connection communication unit 233. Because the communication apparatus 121 that has acquired MAC address information output in step S303 transmits an authentication request with a destination set to the MAC address, in the subsequent processing, the communication of information is executed using the communication interface selected in step S302.

In step S304, the communication apparatus 101 performs authentication processing with the communication apparatus 121. First of all, in order to perform authentication processing, the communication apparatus 101 waits for an authentication request transmitted by the communication apparatus 121. Here, the "authentication request" is a DPP_Authentication_Request frame that complies with the DPP standard. In step S304, in a case where an authentication request has not been received within a predetermined time since the communication apparatus 101 has started to wait for an authentication request, communication parameter receiving processing may end. The authentication request includes authentication information to be used in authentication processing, identification information on the communication apparatus 121, random numbers generated by the communication apparatus 121, and a shared key generation public key (public key of the communication apparatus communication apparatus 121) to be used to generate a shared key. The shared key is used when the random numbers are encrypted for authentication. Here, the "authentication information" specifically refers to a hash value of a public key for authentication of the communication apparatus 101 that is included in a QR code. The identification information on the communication apparatus 121 is a hash value of a public key for authentication. The random numbers are used for authentication when an authentication response to be described below is received (step S304).

The communication apparatus 101 that has received an authentication request performs the verification processing of an apparatus that has transmitted the authentication request. The determination is performed using authentication information included in the authentication request. That is, the communication apparatus 101 calculates a hash value of a public key for authentication of the communication apparatus 101, compares the calculated hash value and a hash value (authentication information) included in the authentication request, and determines that verification has succeeded, in a case where both of the hash values are identical. A hash function to be used in the calculation of the hash value at this time is defined in the DPP standard, and is the same as a hash function used by the communication apparatus 121 in the calculation of a hash value. In a case where verification has succeeded, the communication apparatus 101 generates a shared key using both a public key for shared key generation of the communication apparatus 121 and a secret key for shared key generation of the communication apparatus 101. The shared key is generated based on an Elliptic Curve Diffie-Hellman (ECDH) method, for example. The generation method of the shared key is not limited to the ECDH method, and may be another public key encryption method. Then, the communication apparatus 101 transmits an authentication response. In a case where verification has failed, the communication apparatus 101 ends the processing without transmitting an authentication response. Instead, in a case where verification has failed, the communication apparatus 101 may transmit an authentication response indicating that verification has failed. Here, the "authentication response" is a DPP_Authentication_Response frame that complies with the DPP standard. The authentication response includes a public key for shared key generation of the communication apparatus 101, random numbers generated by the communication apparatus 101, and tag information. The tag information is information obtained by encrypting a hash value that uses random numbers included in the authentication request transmitted by the communication apparatus 121, using the above-described shared key. The tag information is used in authentication processing in the communication apparatus 121.

The communication apparatus 101 that has transmitted the authentication response waits for authentication confirmation transmitted by the communication apparatus 121. A time for which the communication apparatus 101 waits for authentication confirmation may be a predetermined time from the transmission of the authentication response. Here, the "authentication confirmation" is a DPP_Authentication_Confirm frame that complies with the DPP standard, and includes tag information. The tag information is information obtained by the communication apparatus 121 encrypting, by using the shared key, random numbers included in the authentication response transmitted by the communication apparatus 101. The authentication processing here is to determine whether the role is a configurator that provides a communication parameter or an enrollee that receives the communication parameter. Here, the following description will be given of a case in which the communication apparatus 121 is a configurator and the communication apparatus 101 is an enrollee.

In step S305, in a case where authentication in step S305 has succeeded, the communication apparatus 101 transmits a request for a communication parameter to the communication apparatus 121. The request is a DPP_Configuration_Request frame that complies with the DPP standard. The communication parameter is information to be used for execution of communication connection, and includes, for example, a service set identifier (SSID), an encryption method, an encryption key, an authentication method, an authentication key, and connector information defined in the DPP standard.

In step S306, the communication apparatus 101 receives a setting response from the communication apparatus 121 being a configurator. Here, the "setting response" is a DPP_Configuration_Response frame that complies with the DPP standard. The setting response transmitted by the communication apparatus 121 includes a communication parameter, an expiration date of a communication parameter, a public key dedicated for a configurator of the communication apparatus 121, role information, and providing channel information. The communication parameter includes a public key included in an authentication response from the communication apparatus 101, aside from a credential that complies with the DPP standard and includes information to be used for communication connection. The information included in the setting response is encrypted using the shared key generated by the communication apparatus 121. The communication apparatus 101 that has received the setting response decodes information included in the setting response, using the shared key (step S306).

In step S307, based on a communication parameter obtained by decoding, the communication apparatus 101 connects to a wireless network established by the communication apparatus 121. While an example in which the communication apparatus 101 connects to a wireless network established by the communication apparatus 121 has been described, the example is not limited to this. The communication apparatus 101 may acquire a communication parameter by which the communication apparatus 121 connects to a wireless network established by an AP apparatus (for example, the communication apparatus 111), to connect to the wireless network formed by the AP apparatus.

In step S308, the communication apparatus 101 shares a communication parameter received from a configurator by the setting of the communication parameter, among the first STA function unit 231, the second STA function unit 232, and the external connection communication unit 233 in such a manner that the communication parameter is to be used by the units.

For example, in a case where connection to an AP or a smartphone is performed by executing the DPP processing (the above-described authentication processing and communication parameter reception) using the first STA function unit 231, information regarding the AP or the smartphone to which the connection has been performed using the STA function unit 231 may be displayed on a user interface (UI) on which a connection destination is selected using the second STA function unit 232 or the external connection communication unit 233. Furthermore, in a case of connection performed by executing the DPP processing using the first STA function unit 231, connector information defined in the DPP standard is shared among the second STA function unit 232 and the external connection communication unit 233, and then in a case where connection is performed using the second STA function unit 232 or the external connection communication unit 233, the communication parameter setting processing by the DPP may be skipped, and connection processing by network introduction processing may be executed.

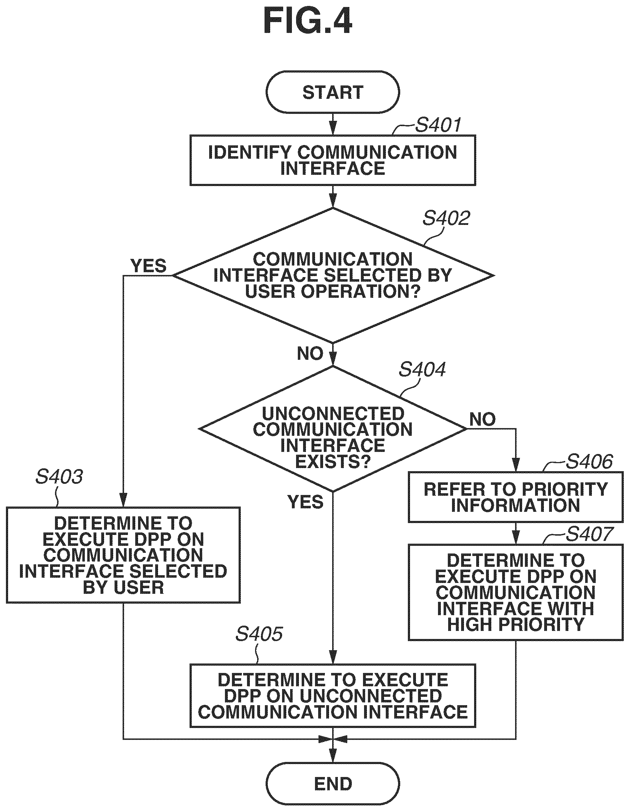

Fig. 4 illustrates a flowchart of selection processing of a communication interface. The processing illustrated in this flowchart corresponds to the processing in step S302 of Fig. 3.

In step S401, the communication apparatus 101 waits for an instruction that has been issued by the user to select a communication interface of a STA for executing the communication parameter setting in compliance with the DPP. In the present exemplary embodiment, the communication apparatus 101 waits for an instruction to select any of the first STA function unit 231, the second STA function unit 232, and the external connection communication unit 233, for a certain period of time. Alternatively, the communication apparatus 101 may cause the user to issue an instruction to manually select or automatically select a communication interface, instead of receiving an instruction issued by the user to select a communication interface. In a case where the user has issued an instruction to manually select a communication interface, an instruction issued by the user to select a communication interface is received.

After the communication apparatus 101 waits for an instruction issued by the user to select a communication interface, in step S402, the communication apparatus 101 determines whether an instruction issued by the user to select a communication interface has been received. In a case where an instruction issued by the user to select a communication interface has been received (YES in step S402), the processing proceeds to step S403. In step S403, the communication apparatus 101 determines to execute a communication parameter setting via the communication interface selected by the user. In a case where an instruction issued by the user to select a communication interface has not been received (NO in step S402), the processing proceeds to step S404. In step S404, the communication apparatus 101 starts processing of automatically selecting a communication interface using the control unit 241, and determines whether an unconnected communication interface exists. That is, the communication apparatus 101 determines whether any unconnected communication interface exists among the first STA function unit 231, the second STA function unit 232, and the external connection communication unit 233.

In a case where an unconnected communication interface exists (YES in step S404), the processing proceeds to step S405. In step S405, the communication apparatus 101 determines to execute the communication parameter setting via the unconnected communication interface. In a case where a plurality of unconnected communication interfaces exists, the communication apparatus 101 determines one unconnected communication interface based on priority information to be described below. In a case where an unconnected communication interface does not exist (NO in step S404), the processing proceeds to step S406. In step S406, the communication apparatus 101 refers to priority information, and determines to perform the communication parameter setting via a communication interface with high priority. The priority information is information in which the priority of a communication interface to be used by the user is preset, and stored in the storage unit 251. The priority information may prioritize a communication interface that controls a less-congested frequency band, in view of a surrounding communication status, instead of priority predetermined by the user.

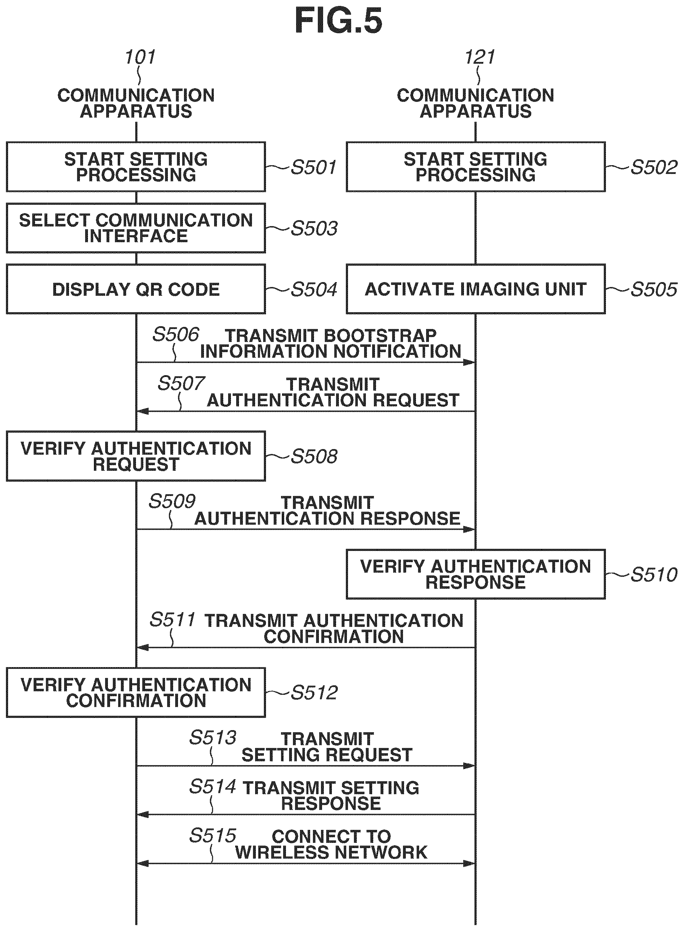

Fig. 5 illustrates a sequence diagram of the communication apparatus 101 and the communication apparatus 121. This sequence illustrates processing of selecting a communication interface, executing DPP processing via the selected communication interface, and executing connection processing.

The communication apparatus 101 and the communication apparatus 121 start communication setting processing in response to an instruction from the user, for example (step S501, S502). A communication interface for executing the DPP is selected from the input unit 211, and the communication apparatus 101 displays bootstrap information including MAC address information on the selected communication interface, via the output unit 221 as a QR code, and waits for an authentication request (step S503, S504). In a case where an authentication request has failed to be received within a predetermined time, the communication apparatus 101 may end waiting for an authentication request. In a case where the communication apparatus 101 does not include a display for displaying a QR code, and a QR code is printed on a label attached to its housing or accessory, the processing in step S504 is skipped. In response to receipt of a communication setting instruction from the user (step S502), the communication apparatus 121 activates an imaging unit to capture an image of the QR code displayed by the communication apparatus 101 (or, printed on the label) (step S505). The imaging unit of the communication apparatus 121 captures an image of the QR code, whereby the communication apparatus 121 acquires information indicated by the QR code (step S506). An output method of the bootstrap information is not limited to display of the QR code, and other communication apparatuses (the communication apparatuses 121 and 122, etc.) may be notified of the bootstrap information via NFC by the near field communication unit 234 or near field wireless communication, such as Bluetooth^{®}. In this case, the processing in steps S504 and S505 is skipped, and the processing in step S506 is performed via near field communication.

The communication apparatus 121 that has acquired information indicated by the QR code generates and transmits an authentication request, and the communication apparatus 101 receives the authentication request (step S507). The communication apparatus 101 verifies the received authentication request (step S508). In a case where The communication apparatus 101 determines that the communication apparatus 121 that has transmitted the authentication request is an apparatus that has captured the image of the QR code, the communication apparatus 101 generates and transmit an authentication response (step S509). The communication apparatus 101 that has transmitted the authentication response to the communication apparatus 121 waits for authentication confirmation to be transmitted from the communication apparatus 121.

The communication apparatus 121 that has received the authentication response verifies the authentication response (step S510). In a case where the communication apparatus 121 determines that authentication has succeeded, the communication apparatus 121 transmits authentication confirmation to the communication apparatus 101 (step S511). The communication apparatus 101 that has received the authentication confirmation from the communication apparatus 121 in step S511 verifies the authentication confirmation (step S512). In a case where tag information has been correctly decoded using a shared key generated by the communication apparatus 101, the communication apparatus 101 determines that authentication has succeeded. In a case where the communication apparatus 101 determines that authentication has succeeded, the communication apparatus 101 transmits a setting request to request a communication parameter (step S513), and waits for a setting response to be transmitted from the communication apparatus 121.

The communication apparatus 121 that has received the setting request transmits a setting response including a communication parameter (step S514). The communication apparatus 101 that has received the setting response connects to a wireless network based on the communication parameter included in the setting response (step S515).

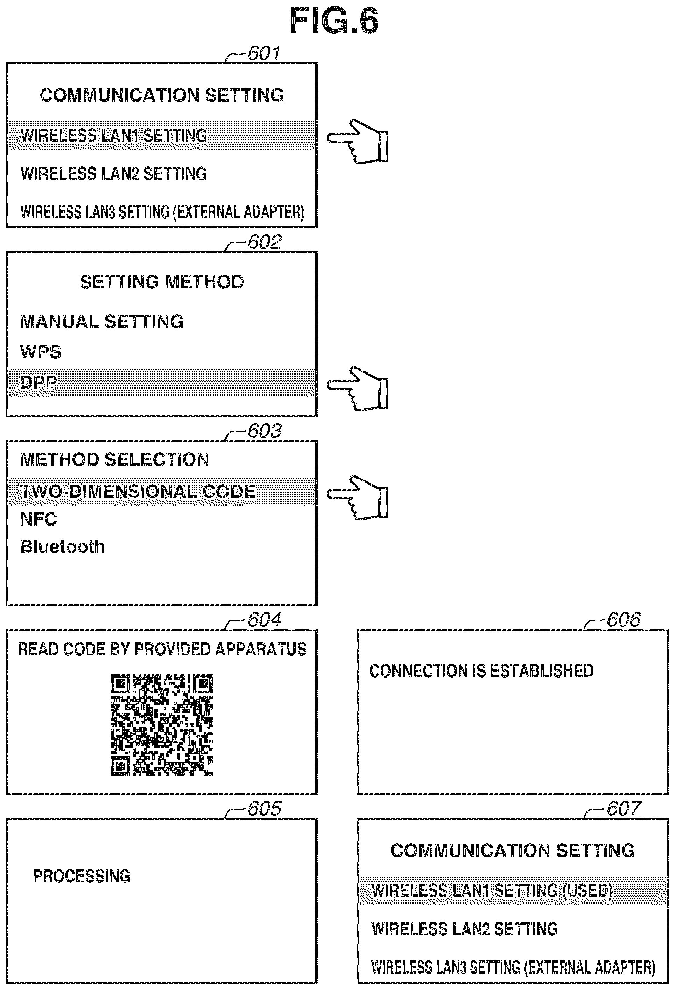

Fig. 6 illustrates an example of transition of a user interface of the communication apparatus 101 (i.e., a screen of a display unit). Fig. 6 illustrates an example of screen display in the above-described processing in steps S401, 402, and S503. While a description will be given of a case in which the communication apparatus 101 is connected with none of the communication apparatus 111 and the communication apparatuses 121 and 122, all communication interfaces may be used in connection.

A display 601 is a "communication setting" screen to be displayed in a case where the user has selected a communication setting menu by operating the output unit 221 or the input unit 211. On the "communication setting" screen on which a communication interface via which a setting is to be performed is selected, a "wireless LAN1 setting", a "wireless LAN2 setting", and "wireless direct" are provided as setting menus. In the present exemplary embodiment, the "wireless LAN1 setting" is a setting menu for a setting related to wireless LAN communication that uses the first STA function unit 231. The "wireless LAN2 setting" is a setting menu for a setting related to wireless LAN communication that uses the second STA function unit 232. A "wireless LAN3 setting" is a setting menu for a setting related to wireless LAN communication that uses the external connection communication unit 233. Here, the "wireless LAN1 setting" has been selected by the user on the display 601.

A display 602 is a "setting method" screen and is a screen that is displayed in a case where the "wireless LAN1 setting" has been selected on the "communication setting" screen. Here, the display 602 is a screen on which a method by which a parameter for the first STA function unit 231 to connect with an external apparatus via wireless LAN communication is set is selected. On the "setting method" screen, "manual setting", "WPS", and "DPP" are provided as setting menus. The "manual setting" is an item to manually set a service set identifier (hereinafter, SSID) or a passphrase to be used for wireless connection. In other words, the "manual setting" is a setting for the user entering a parameter by which the first STA function unit 231 connects with an external apparatus via wireless LAN communication. The "WPS" is a setting item to set a parameter to be used for wireless connection in Wi-Fi Protected Setup (WPS). The "DPP" is a setting item to exchange a parameter to be used for wireless connection in the above-described DPP method. Here, on a display 502, the "DPP" has been selected by the user.

A display 603 is a "method selection" screen and is a screen that is displayed in a case where the "DPP" is selected on the "setting method" screen. The "method selection" screen is a screen on which a method for providing bootstrap information in the DPP processing is selected, and "two-dimensional code", "NFC", and "Bluetooth" are provided as setting menus. The "two-dimensional code" is a setting item to output bootstrapping information by a two-dimensional code, such as a QR code, for example. The "NFC" is a setting item to output bootstrapping information via NFC, and the "Bluetooth" is a setting item to output bootstrapping information via Bluetooth communication. Here, on the display 603, the "two-dimensional code" has been selected by the user. In a case where the "NFC" or the "Bluetooth" has been selected, bootstrapping information is provided via near field wireless communication using the near field communication unit 234 by writing bootstrapping information into an NFC tag or setting bootstrapping information in a Bluetooth advertise beacon.

A display 604 indicates a QR code^{®} displayed as bootstrapping information, and is displayed in a case where the "two-dimensional code" is selected on the "method selection" screen. In a case where bootstrapping information including MAC address information on the selected communication interface is output, as described above, information may be dynamically generated and displayed, or preliminarily-generated information may be acquired and displayed. The communication apparatus 121 or the communication apparatus 122 reads this QR code, whereby the DPP processing is started. A display 605 is a screen that is displayed in a case where the DPP processing is executed with the communication apparatus 121 or the communication apparatus 122 using the first STA function unit 231. A display 606 is a screen that is displayed in response to completion of communication connection after the first STA function unit 231 has executed the DPP processing.

A display 607 is display of the "communication setting" screen. Because the first STA function unit 231 currently performs communication connection, the "wireless LAN1 is indicated with display indicating that connection is ongoing. The display may be displayed using characters or using an icon. Information indicating that connection is ongoing may be included and displayed in such a manner that the information is recognizable to the user. In this case, for example, information indicating an SSID of a network of which connection is ongoing may be included and displayed. Because the second STA function unit 232 and the external connection communication unit 233 are not in a connected state, as for the "wireless LAN2 setting" and the "wireless LAN3 setting", information indicating that connection is ongoing is not displayed. As for the "wireless LAN2 setting" and the "wireless LAN3 setting", a communication setting is also performed similarly to the "wireless LAN1 setting".

While an example case in which bootstrapping information including MAC address information on one selected communication interface is output has been described, information included in bootstrapping information is not limited to this. Bootstrapping information including MAC address information of a plurality of communication interfaces may be output. For example, bootstrapping information including MAC addresses of both communication interfaces of the first STA function unit 231 and the second STA function unit 232 is output. Instead of MAC addresses, bootstrapping information including channel information or frequency band information on a plurality of communication channels may be output.

The description has been given of the case of selecting, in a case where a communication apparatus is configured to simultaneously operate a plurality of STA functions, a communication interface from among a plurality of communication interfaces that is able to execute a STA function, and executing a communication parameter setting by the DPP. In the case of the configuration with one STA function as in the prior art, consideration of which communication interface is to be used for DPP processing is not made, but in a configuration in which a plurality of STA functions exists, selection of a communication interface from among a plurality of executable communication interfaces is involved to execute the DPP. Thus, by the present invention, in a configuration in which a plurality of STA functions exists, a communication interface is selected from among a plurality of communication interfaces that is able to execute a STA function, and the DPP is executed, which leads to improvement in the convenience of the user.

As described above, communication interfaces that provide STA functions may be exclusively controlled in chronological order in one embedded wireless IC chip, or may be individually controlled in embedded wireless IC chips corresponding to the respective communication interfaces. A STA function may be provided in an externally-connected wireless communication adapter.

While, in the present exemplary embodiment, the description has been given of a case of controlling communication interfaces by a common application, the DPP may be executed by an individual application, such as an auxiliary application of a communication adapter connecting to the external connection communication unit 233.

The communication apparatus 101 according to the present exemplary embodiment has three STA functions by the first STA function unit 231, the second STA function unit 232, and the external connection communication unit 233, but the number of STA functions is not limited to three as long as the communication apparatus 101 has a plurality of STA functions. For example, the communication apparatus 101 may have two STA functions by the first STA function unit 231 and the second STA function unit 232, or may have two STA functions by the first STA function unit 231 and the external connection communication unit 233.

While a plurality of STA functions has been described as an example of a plurality of wireless LAN communication interfaces, the example of a plurality of communication interfaces is not limited to this, and may be a plurality of communication interfaces including an AP function and a STA function. A plurality of wireless IC chips may be provided to physically provide a plurality of communication interfaces, or a plurality of communication interfaces may be virtually provided on one wireless IC chip. For example, in an IEEE802.11be standard being an Institute of Electrical and Electronics Engineers (IEEE) series 802.11 standard, the present invention is applicable also to a configuration of performing multi-link communication in which one apparatus and another apparatus establish a plurality of wireless links, and perform communication concurrently using the plurality of wireless links. An apparatus that is able to execute multi-link communication by establishing a plurality of wireless links and performing communication is called a multi-link device (MLD). An AP and STA establish a plurality of wireless links that respectively use different frequency channels, and perform communication. The STA is able to establish a first link that uses a 5-gigahertz (GHz) band, and a second link that uses a 6-GHz band, with the AP, for example. Nevertheless, this is an example, and three or more links may be established, or a combination of frequency bands other than the combination of the 5-GHz band and the 6-GHz band may be used. Frequency channels to be used in a plurality of wireless links may be a plurality of different frequency channels included in the same frequency band. For example, in the first link, a 36 channel (ch) in the 5-GHz band may be used, and in the second link, a 161 ch in the 5-GHz band may be used. The term "ch" stands for "channel". In a case where three or more wireless links are established, links that use the same frequency band, and links that use different frequency bands may be mixed. For example, in addition to the first link that uses a 5 ch in the 6-GHz band and the second link that uses a 213 ch in the 6-GHz band, a third link that uses a 6ch in the 2.4-GHz band may be further established. Establishing a plurality of connections that use different frequency channels allows, even in a case where sufficient communication quality cannot be obtained in any frequency channel due to congestion, communication to be performed with good communication quality using another frequency channel. This prevents throughput degradation in communication and increase in communication delay. Communication interfaces corresponding to the respective links in a case where such multi-link communication is performed is also applicable to the configuration of the present exemplary embodiment as a plurality of communication interfaces. In this case, at least one or more of channel information, frequency band information, or a MAC address of a selected link is output as bootstrapping information. Then, in the selected link, communication parameter setting processing is performed in compliance with the DPP.

[Second Exemplary Embodiment]. In the first exemplary embodiment, a description has been given of an example in which a communication parameter is provided from the communication apparatus 121 to the communication apparatus 101 where the communication apparatus 101 serves as an enrollee and the communication apparatus 121 serves as a configurator. The configuration is not limited to this. As another case, the communication apparatus 101 may serve as a configurator and the communication apparatus 121 may serve as an enrollee. This case will be described in the present exemplary embodiment. Because a basic configuration of the present exemplary embodiment is the same as that of the first exemplary embodiment, only a difference will be described.

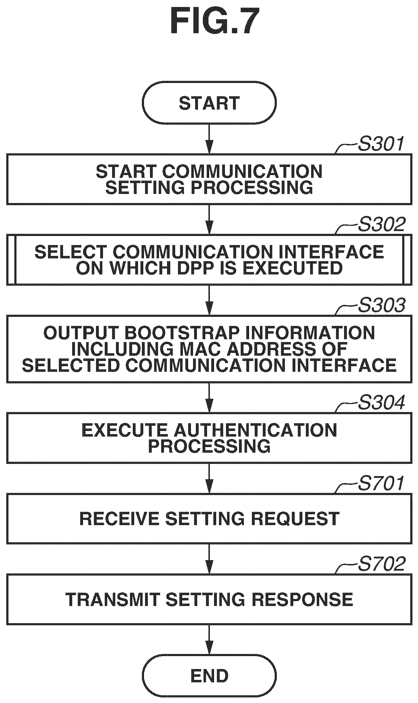

A flowchart in Fig. 7 illustrates processing that is executed by a communication apparatus 1 according to the present exemplary embodiment. This flowchart has the same basic configuration as the processing in the flowchart in Fig. 3, and only a difference will be described.

In step S701, the communication apparatus 101 receives a request for a communication parameter from the communication apparatus 121. The request is a DPP_Configuration_Request frame that complies with the DPP standard.

In step S702, the communication apparatus 101 transmits a setting response to the communication apparatus 121 being an enrollee. The "setting response" is a DPP_Configuration_Response frame that complies with the DPP standard. The setting response transmitted by the communication apparatus 101 includes a communication parameter, an expiration date of a communication parameter, a public key dedicated for a configurator of the communication apparatus 121, role information, and providing channel information. The communication parameter transmitted here is a communication parameter for use in connecting to a network to which the first STA function unit 231 connects, but the communication parameter is not limited to this. The communication parameter may be a communication parameter stored in the communication apparatus 101. The communication apparatus 121 provided with the communication parameter participates in a network using the provided communication parameter.

Through the above-described processing, a communication parameter for participating in a network to which the selected communication interface connects is provided to a counterpart apparatus. For example, in a case where the first STA function unit 231 connects to an AP1 and the second STA function unit 232 connects to an AP2, and in a case where the user selects the first STA function unit 231, the communication apparatus 101 provides a counterpart apparatus with a communication parameter for connection to the AP1.

[Third Exemplary Embodiment] While, in the first exemplary embodiment, the DPP processing has been described as an example of communication parameter setting processing, an example of the communication parameter setting processing is not limited to this. In the present exemplary embodiment, a description will be given of an example of performing communication parameter setting processing using the WPS, instead of the DPP processing.

Because a basic configuration of the present exemplary embodiment is the same as that of the first exemplary embodiment, only a difference will be described.

In response to a start of the communication parameter setting processing that uses the WPS, similarly to step S302 of Fig. 3, a communication interface on which the WPS is to be executed is selected. In the communication interface selection, the processing equivalent to the flowchart illustrated in Fig. 4 is executed. After a communication interface is selected in a step equivalent to step S302, WPS processing is executed using the selected communication interface. For example, the communication apparatus 101 transmits a probe request frame using the selected communication interface.

The communication apparatus 121 that has started to receive a probe request frame from the communication apparatus 101 receives the probe request frame from the communication apparatus 101. Then, the communication apparatus 121 transmits a probe response frame including an information element indicating that the WPS is being activated, to the communication apparatus 101.

In response to receipt of the probe response frame from the communication apparatus 121, the communication apparatus 101 connects to a wireless network established by the communication apparatus 121. Specifically, the communication apparatus 101 transmits an association request including an information element of WPS, to the communication apparatus 121.

In response to receipt of the association request from the communication apparatus 101, the communication apparatus 121 transmits an association response including an information element of WPS, to the communication apparatus 101. In this manner, connection to a wireless network 103 by the communication apparatus 101 is completed. In a case where connection that uses a signal including an information element of WPS is performed, the communication apparatus 101 and the communication apparatus 121 communicate signals alone to be used for sharing of a communication parameter. That is, communication of user data and the like between the communication apparatus 101 and the communication apparatus 121 is not performable.

Then, the communication apparatus 101 starts parameter sharing processing that complies with the WPS standard. Specifically, the communication apparatus 101 starts a WPS parameter sharing session by transmitting an EAPOL-Start frame.

The communication apparatus 121 performs WPS parameter sharing processing with the communication apparatus 101 by using an EAP frame. Specifically, using the EAP frame, the communication apparatus 121 performs the sharing of an encryption key using Diffie-Hellman key exchange (DH). The communication apparatus 121 transmits a communication parameter encrypted using the encryption key shared with the communication apparatus 101. The communication apparatus 101 decodes the communication parameter using the encryption key shared with the communication apparatus 121. After that, the communication apparatus 101 connects to a wireless network using the decoded communication parameter. In this case, the communication apparatus 101 and the communication apparatus 121 can communicate user data. Through such processing, the communication apparatus 101 executes communication parameter setting processing by a method that complies with the WPS standard, with the communication apparatus 121 on the selected communication interface. The communication apparatus 101 may communicate a frame, such as an authentication request frame or an association request, with the communication apparatus 121 by using a communication interface selected in a step equivalent to step S302. The communication apparatus 101 may communicate a frame including a MAC address, channel information, or frequency information on the selected communication interface, with the communication apparatus 121. Similarly to the first exemplary embodiment, for example, the configuration of the present exemplary embodiment is also applicable to a plurality of communication interfaces in multi-link communication.

[Fourth Exemplary Embodiment]. In the first exemplary embodiment, the DPP processing has been described as an example of communication parameter setting processing. In the present exemplary embodiment, a description will be given of an example of performing communication parameter setting processing using Wi-Fi Direct^{®} (hereinafter, described as "WFD").

Because a basic configuration of the present exemplary embodiment is similar to that of the first exemplary embodiment, only a difference will be described.

In response to a start of the communication parameter setting processing that uses the WFD, similarly to step S302 of Fig. 3, a communication interface on which the WFD is to be executed is selected. In the communication interface selection, the processing equivalent to the flowchart illustrated in Fig. 4 is executed. After a communication interface is selected in a step equivalent to step S302, WFD processing is executed using the selected communication interface. For example, the communication apparatus 101 executes device search processing (P2P discovery processing) defined by the Wi-Fi Direct specification, using the selected communication interface.

In a case where the communication apparatus 101 and the communication apparatus 121 have found each other, next, group owner (GO) determination processing (GO negotiation processing) defined by the Wi-Fi Direct specification is executed. Then, the communication apparatus 101 and the communication apparatus 121 exchange a communication parameter.

(Other Embodiments). A configuration in which one or more of the above-described exemplary embodiments are combined may be adopted. While the DPP, the WPS, and the like have been described as examples of the communication parameter setting processing, the present exemplary embodiments are not limited thereto.

The present invention can also be realized by processing in which a program for realizing one or more functions of the above-described exemplary embodiments is supplied to a system or an apparatus via a network or a storage medium, and one or more processors in a computer of the system or the apparatus read and execute the program. The present invention can also be realized by a circuit (for example, an ASIC) that realizes one or more functions.

The present invention is not limited to the above-described exemplary embodiments, and various modifications and variations can be made without departing from the spirit and scope of the present invention. To disclose the scope of the present invention, the following claims are appended.

This application claims the benefit of Japanese Patent Applications No. 2022-150563, filed September 21, 2022, and No. 2023-106363, filed June 28, 2023, which are hereby incorporated by reference herein in their entirety.

## Claims

1. A communication apparatus capable of performing communication using a plurality of communication interfaces for wireless local area network (LAN) communication, the communication apparatus comprising:
execution means for executing setting processing of a communication parameter; and
determination means for determining a communication interface to be used in the setting processing, from among the plurality of communication interfaces,
wherein the execution means executes the setting processing on the communication interface determined by the determination means.

2. The communication apparatus according to Claim 1,
wherein the setting processing is setting processing that is based on a device provisioning protocol (DPP), and
wherein the communication apparatus further includes output means for outputting bootstrap information including information corresponding to the communication interface determined by the determination means.

3. The communication apparatus according to Claim 2, wherein the information corresponding to the communication interface is a media access control (MAC) address of the communication interface.

4. The communication apparatus according to Claim 3, further comprising receiving means for receiving an authentication request that complies with the DPP and has been transmitted with a destination set to the MAC address.

5. The communication apparatus according to Claim 2, wherein the bootstrap information includes a public key of the communication apparatus.

6. The communication apparatus according to Claim 2, wherein the bootstrap information includes channel information.

7. The communication apparatus according to Claim 1, wherein the output means displays a two-dimensional code including the bootstrap information.

8. The communication apparatus according to Claim 1, wherein the output means outputs via near field communication (NFC) or Bluetooth communication including the bootstrap information.

9. The communication apparatus according to Claim 1, wherein the setting processing is setting processing that is based on Wi-Fi Protected Setup.

10. The communication apparatus according to Claim 1, wherein the setting processing is setting processing that is based on Wi-Fi Direct^{®}.

11. The communication apparatus according to Claim 1, wherein the communication apparatus executes a plurality of station functions using the plurality of communication interfaces, and is able to simultaneously connect with a plurality of base stations.

12. The communication apparatus according to Claim 1, wherein the communication apparatus executes multi-link communication using the plurality of communication interfaces.

13. The communication apparatus according to Claim 1, further comprising receiving means for receiving a user operation of selecting a communication interface,
wherein the determination means determines a communication interface to be used in the setting processing, based on the user operation received by the receiving means.

14. The communication apparatus according to Claim 1, wherein the plurality of interfaces is provided on one communication chip or on a plurality of communication chips.

15. The communication apparatus according to Claim 1, further comprising:
acquisition means for acquiring a communication parameter by the setting processing; and
execution means for executing communication connection that is based on the communication parameter acquired by the acquisition means, by using the communication interface determined by the determination means.

16. The communication apparatus according to Claim 1, wherein the plurality of communication interfaces includes an embedded wireless integrated circuit (IC) chip and an externally-connected wireless communication adapter.

17. The communication apparatus according to Claim 1, wherein wireless connection is performed by sharing a communication parameter acquired in the setting processing, among the plurality of communication interfaces.

18. The communication apparatus according to Claim 1, wherein the determination means determines a communication interface to be used in the setting processing, in accordance with preset priority.

19. The communication apparatus according to Claim 1, wherein the determination means determines a communication interface to be used in the setting processing, based on a surrounding communication status.

20. A control method that is executed by a communication apparatus capable of performing communication using a plurality of communication interfaces for wireless local area network (LAN) communication, the control method comprising:
an execution step for executing setting processing of a communication parameter; and
a determination step for determining a communication interface to be used in the setting processing, from among the plurality of communication interfaces,
wherein in the execution step, the setting processing is executed on the communication interface determined by the determination means.

21. A program for causing a computer to function as a communication apparatus according to any one of Claims 1 to 19.
